# EUROPÄISCHE PATENTSCHRIFT

(11) **EP 1 762 591 B1**
(45) Veröffentlichungstag und Bekanntmachung des Hinweises auf die Patenterteilung: **09.08.2017**
(21) Anmeldenummer: 06017485.1
(22) Anmeldetag: 23.08.2006
(51) Int. Cl.: C08K 5/3492, B32B 27/18

(54) **Zusammensetzung enthaltend Polycarbonat und neuartige UV-Absorber**
Composition comprising polycarbonate and new UV-absorber
Composition comprenant un polycarbonate et un nouvel agent absorbant les radiations UV

(30) Priorität: 03.09.2005 DE 102005041952
(43) Veröffentlichungstag der Anmeldung: 14.03.2007
(73) Patentinhaber: BASF SE, 67056 Ludwigshafen am Rhein (DE)
(72) Erfinder: Rüdiger, Claus, Dr., 47829 Krefeld (DE); Buckel, Frank, Dr., 47800 Krefeld (DE); Schwarz, Peter, Dr., 47800 Krefeld (DE); Röhner, Jürgen, 51069 Köln (DE); Grüter-Reetz, Tanja, 47829 Krefeld (DE)
(74) Vertreter: BASF IP Association

(56) Entgegenhaltungen:
- EP-A- 0 826 675
- EP-A- 1 308 084
- WO-A-2005/012405
- GB-A- 2 290 745
- US-A1- 2004 209 020

## Beschreibung

Die vorliegende Erfindung betrifft Zusammensetzungen enthaltend Polycarbonat und neuartige UV-Absorber sowie Erzeugnisse enthaltende diese Zusammensetzungen.

Formkörper aus Polycarbonat sind bereits seit längerem bekannt. Polycarbonatplatten sind beispielsweise aus EP A 0 110 221 bekannt und werden für eine Vielzahl von Anwendungszwecken bereitgestellt. Die Herstellung der Platten erfolgt beispielsweise durch Extrusion von Zusammensetzungen, die Polycarbonat enthalten. Gegebenenfalls kann eine Coextrusion mit weiteren Zusammensetzungen, die Polycarbonat und zusätzlich einen erhöhten Anteil an UV-Absorbern enthalten, erfolgen. Polycarbonat hat jedoch den Nachteil, dass es nicht selbst inhärent UV-stabil ist. Die Empfindlichkeitskurve von Bisphenol A-Polycarbonat weist die höchste Empfindlichkeit zwischen 320 nm und 330 nm auf. Unterhalb von 300 nm gelangt kaum Sonnenstrahlung auf die Erde, und oberhalb von 350 nm ist Polycarbonat so unempfindlich, dass keine nennenswerte Vergilbung mehr stattfindet.

Um Polycarbonat vor dem schädlichen Einfluss der UV-Stahlen in der Atmosphäre zu schützen, werden allgemein UV-Stabilisatoren eingesetzt, die die UV-Strahlung absorbieren und in unschädliche thermische Energie umwandeln.

Vorteilhaft für einen dauerhaften Schutz ist es dabei, die schädliche UV-Strahlung bereits vor Erreichen der Polycarbonatoberfläche effektiv herauszufiltern, wie es durch die Verwendung von UV-Schutz-Schichten, beispielsweise UV-Absorber-haltige Coextrusionsschichten, UV-Absorber-haltige Folien oder auch UV-Absorber-haltige Lacke, auf Polycarbonat möglich ist.

Eine weitere sehr wichtige Eigenschaft ist der Schutz von Polycarbonaterzeugnissen, insbesondere Polycarbonatplatten vor UV-Licht bei Außenanwendungen. Hierzu wird auf Polycarbonatplatten (Massiv-, Well- und Stegplatten) im Coextrusionsverfahren eine Polycarbonatdeckschicht in Dicken von 10 bis 200 µm, bevorzugt 20 bis 100 µm, besonders bevorzugt 20 bis 60 µm aufgebracht, die höhere Konzentrationen von UV-Absorbern enthält, die üblicherweise zwischen 0,5 und 15 w% UV-Absorber liegen.

EP A 0 320 632 beschreibt coextrudierte Platten aus Zusammensetzungen, die Polycarbonat enthalten, die einen UV-Absorber enthalten und ein Gleitmittel enthalten können. Nachteilig ist, dass bei längerer Extrusionsdauer die Oberfläche der Platten durch Ausdampfungen aus der Schmelze der Zusammensetzung, besonders bei der Coextrusion, nachteilig beeinflusst wird.

Ein bei der Extrusion solcher Platten immer wieder auftretendes Problem ist das Absetzen flüchtiger Bestandteile aus der Zusammensetzung am Kalibrator (bei Stegplatten) oder auf den Walzen (bei Massivplatten), die zu Oberflächenstörungen auf den Platten führen können. Flüchtige Bestandteile sind beispielsweise UV-Absorber, Entformungsmittel und andere niedermolekulare Bestandteile der Zusammensetzung. Das vermehrte Ausdampfen des UV-Absorbers aus der Schmelze der Coextrusionsschicht führt zur Belagsbildung am Kalibrator oder den Walzen und schließlich zur Bildung von Störungen der Plattenoberfläche (z.B. weiße Flecken, Welligkeit usw.). Am Kalibrator führt außerdem der Polycarbonatabrieb zu pulverigen Ablagerungen auf den Polycarbonatplatten.

Die verwendeten herkömmlichen UV-Absorber sind verschieden von (Bis[2-hydroxy-5-tert.-octyl-3-(benzotriazol-2-yl)phenyl]methan), 2-(4,6-Diphenyl-1,3,5-triazin-2-yl)-5-(hexyl)oxy-phenol und 2-Cyano-3,3-diphenyl-propensäure-2,2-bis[(2-cyano-1-oxo-3,3-diphenyl-2-propenyl)oxy]methyl-1,3-propanediylester. Solche UV-Absorber werden zum Beispiel in der EP A 1 308 084 verwendet. Der vorliegenden Erfindung liegt die Aufgabe zugrunde zum einen den Herstellprozess der beschriebenen mehrschichtigen Erzeugnisse durch Coextrusion so zu verbessern, dass die Reinigungsintervalle der Kalibratorplatten (Stegplattenextrusion) bzw. der Walzen (Massivplattenextrusion) möglichst groß sind, und zum anderen die Witterungsbeständigkeit der hergestellten mehrschichtigen Erzeugnisse zu verbessern.

Eine Verbesserung der Witterungsbeständigkeit zeigt sich z.B. in einer geringeren Gelbwertzunahme (Zunahme des Yellowness-Index YI) nach künstlicher Bewitterung.

Die oben beschriebene Aufgabe wird überraschenderweise gelöst durch eine Zusammensetzung enthaltend Polycarbonat und 0,01 bis 2,5 Gew.-Teile, bezogen auf 100 Gew.-Teile des Polycarbonats, einer Verbindung der Formel I 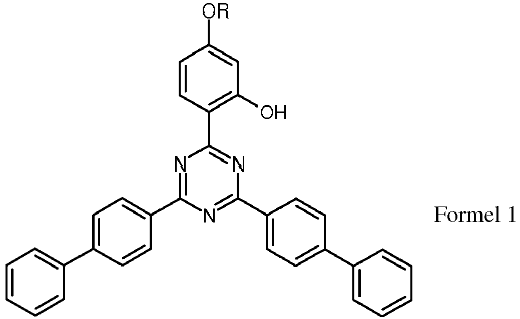 wobei R für 2-Ethylhexyl steht, als einzigen UV-Absorber.

Die erfindungsgemäßen Zusammensetzungen enthalten üblicherweise 0,01 bis 2,5 Gew.-Teile bevorzugt 0,5 bis 2,5 Gew.-Teile, besonders bevorzugt 1 bis 2,5 Gew.-Teile, ganz besonders bevorzugt 1,25 bis 2,5 Gew.-Teile UV-Absorber der Formel 1, bezogen jeweils auf 100 Gew.-Teile Polycarbonat.

Thermoplastische, aromatische Polycarbonate für die erfindungsgemäßen Zusammensetzungen sind Homopolycarbonate, Copolycarbonate und thermoplastische Polyestercarbonate. Sie haben bevorzugt mittlere Molekulargewichte M̅_{w} von 18.000 bis 40.000 g/mol, vorzugsweise von 26.000 bis 36.000 g/mol und insbesondere von 28.000 bis 35.000 g/mol, ermittelt durch Messung der rel. Lösungsviskosität in Dichlormethan oder in Mischungen gleicher Gewichtsmengen Phenol/o-Dichlorbenzol geeicht durch Lichtstreuung.

Die Schmelzeviskosität der Zusammensetzungen sollte vorzugsweise kleiner sein als die des Substrates, auf die sie aufgebracht werden, wenn mehrschichtige Erzeugnisse hergestellt werden.

Zur Herstellung von Polycarbonaten für die erfindungsgemäßen Zusammensetzungen sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird beispielhaft an dem Phasengrenzflächenverfahren beschrieben.

Als Ausgangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und α,α'-Bis(hydroxyphenyl)-diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl)diphenol (Bisphenol M), 4,4-(para-Phenylendiisopropyl)diphenol, 1,1-Bis-(4-hydroxyphenyl)-3,3,5-trimethylcyclohexan (BP-TMC) sowie gegebenenfalls deren Gemische. Besonders bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozess Diphenylcarbonat bzw. Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol. Vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden die in DE-A 42 38 123 genannten Katalysatoren verwendet.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Es können Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1-20 Mol-%, bevorzugt 2-10 Mol-%, je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Das erfindungsgemäß bevorzugte Polycarbonat ist Bisphenol-A-Homopolycarbonat.

Die Einarbeitung der UV-Absorber in die zu verwendenden, erfindungsgemäßen Zusammensetzungen der Platten erfolgt nach üblichen Methoden, beispielsweise durch Vermischen von Lösungen der UV-Absorber mit Lösungen der Kunststoffe in geeigneten organischen Lösungsmitteln wie CH₂Cl₂, Halogenalkanen, Halogenaromaten, Chlorbenzol und Xylolen. Die Substanzgemische werden dann in bekannter Weise via Extrusion homogenisiert; die Lösungsgemische werden in bekannter Weise durch Ausdampfen des Lösungsmittels und anschließender Extrusion entfernt, beispielsweise compoundiert.

Die erfindungsgemäßen Zusammensetzungen können weitere übliche Verarbeitungshilfsmittel, insbesondere weitere Entformungsmittel und Fließmittel enthalten.

Geeignete Entformungsmittel (Gleitmittel) sind insbesondere Penta-erythrit-tetra-stearat und Stoffe der Formel 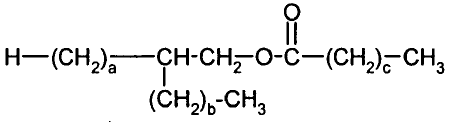 wobei a = 0 bis 20, b = 1 bis 25 und c = 10 bis 40 ist.

Die erfindungsgemäßen Zusammensetzungen können insbesondere übliche Stabilisatoren für Polycarbonate, insbesondere übliche Thermostabilisatoren enthalten.

Geeignete Stabilisatoren für die Polycarbonate für die erfindungsgemäßen Zusammensetzungen sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosphonit und Triarylphosphit genannt. Besonders bevorzugt sind Triphenylphosphin und Tris-(2,4-di-tert.-butylphenyl)phosphit.

Beispiele für Antistatika sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Alle für die Synthese der erfindungsgemäßen Zusammensetzungen verwandten Einsatzstoffe und Lösungsmittel können aus ihrer Herstellung und Lagerung mit entsprechenden Verunreinigungen kontaminiert sein, wobei es das Ziel ist, mit so sauberen Ausgangsstoffen wie möglich zu arbeiten.

Das Vermischen der einzelnen Bestandteile kann in bekannter Weise sowohl sukzessive als auch simultan erfolgen und zwar sowohl bei Raumtemperatur als auch bei erhöhter Temperatur.

Die Einarbeitung der Zusätze in die erfindungsgemäßen Zusammensetzungen erfolgt bevorzugt in bekannter Weise durch Vermischen von Polymergranulat mit den Zusätzen bei Temperaturen von etwa 200 bis 330°C in üblichen Aggregaten wie Innenknetern, Einschneckenextrudern und Doppelwellenextrudern beispielsweise durch Schmelzecompoundierung oder Schmelzeextrusion oder durch Vermischen der Lösungen des Polymers mit Lösungen der Additive und anschließende Verdampfung der Lösungsmittel in bekannter Weise. Der Anteil der Additive in der Zusammensetzung kann in weiten Grenzen variiert werden und richtet sich nach den gewünschten Eigenschaften der Formmasse. Der Gesamtanteil der Additive in der Zusammensetzung beträgt etwa bis zu 20 Gew.-%, vorzugsweise 0,2 bis 12 Gew.-%, bezogen auf das Gewicht der Zusammensetzungen.

Ein weiterer Gegenstand der vorliegenden Erfindung sind Erzeugnisse enthaltend die erfindungsgemäße Zusammensetzung.

Ein weiterer Gegenstand der vorliegenden Erfindung sind mehrschichtige Erzeugnisse umfassend mindestens eine Schicht bestehend aus einer erfindungsgemäßen Zusammensetzung.

Eine mögliche Ausführungsform dieses Aspekts der vorliegenden Erfindung bildet ein mehrschichtiges Erzeugnis umfassend eine erste Schicht (A) und eine zweite Schicht (B), wobei die erste Schicht (A) eine UV-Schutzschicht aus Polycarbonat ist, die einen UV-Stabilisator gemäß Formel (I) enthält, und die zweite Schicht (B) ein Polycarbonat enthält. Die UV-Schutzschicht (A) kann dabei die Form einer Folie oder einer coextrudierten Schicht annehmen.

Eine bevorzugte Ausführungsform der vorliegenden Erfindung sind mehrschichtige Platten aus mindestens drei Schichten, wobei eine oder beide der äußeren Schichten, das heißt die Schichten, die der Lichtquelle zugewandt sind, aus einer erfindungsgemäßen Zusammensetzung (A) bestehen.

Die Herstellung solcher mehrschichtigen Erzeugnisse erfolgt bevorzugt durch Coextrusion. Die Coextrusion als solche ist literaturbekannt (siehe beispielsweise EP-A 0 110 221 und EP-A 0 110 238). Im vorliegenden Fall wird vorzugsweise wie folgt verfahren:
An einem Coextrusionsadapter sind Extruder zur Erzeugung der Kernschicht und Deckschicht(en) angeschlossen. Der Adapter ist so konstruiert, dass die die Deckschicht(en) formende Schmelze als dünne Schicht haftend auf die Schmelze der Kernschicht aufgebracht werden.

Der so erzeugte, mehrschichtige Schmelzestrang wird dann in der anschließend angeschlossenen Düse in die gewünschte Form (Steg- oder Massivplatte) gebracht. Anschließend wird in bekannter Weise mittels Kalandrierung (Massivplatte) oder Vakuumkalibrierung (Stegplatte) die Schmelze unter kontrollierten Bedingungen abgekühlt und anschließend abgelängt. Gegebenenfalls kann nach der Kalibrierung ein Temperofen zur Eliminierung von Spannungen angebracht werden. Anstelle des vor der Düse angebrachten Adapters kann auch die Düse selbst so ausgelegt sein, dass dort die Zusammenführung der Schmelzen erfolgt.

Die erfindungsgemäßen Erzeugnisse haben sich als besonders vorteilhaft im Langzeitcoextrusionsverhalten erwiesen. Sie lassen sich problemlos verarbeiten und zeigen eine deutlich geringere Belagsbildung während des Herstellprozesses auf den Kalibratorplatten (Stegplattenextrusion) oder den Walzen (Massivplattenextrusion).

Die erfindungsgemäßen Erzeugnisse haben sich darüber hinaus als besonders vorteilhaft im Bewitterungstest erwiesen. Sie zeigen in den als Produkt erhaltenen Erzeugnissen keine Beeinträchtigungen. Die Witterungsstabilität der coextrudierten Polycarbonatplatten zeigt auch bei kleineren Konzentrationen eines UV-Absorbers der Formel 1 ein deutlich besseres Verhalten als bei Verwendung des Standard UV-Absorbers Tinuvin 360^{®}.

Die erfindungsgemäßen Zusammensetzungen und (gegebenenfalls mehrschichtigen) Erzeugnisse erlauben die erleichterte Herstellung von Formteilen, insbesondere von Platten und aus ihnen hergestellte Produkte wie z.B. Verscheibungen für Gewächshäuser, Wintergärten, Bushaltestellen, Reklametafeln, Schilder, Schutzscheiben, Automobilverscheibungen, Fenster und Überdachungen. Nachträgliche Bearbeitungen der mit der erfindungsgemäßen Zusammensetzung beschichteten Erzeugnisse, wie z.B. Tiefziehen oder Oberflächenbearbeitungen, wie z.B. Ausrüstung mit Kratzfestlacken, wasserspreitenden Schichten und ähnliches sind möglich und die durch diese Verfahren hergestellten Erzeugnisse sind ebenfalls Gegenstand der Erfindung.

Die Erfindung wird durch das folgende Beispiel weiter erläutert.

### Beispiel

10 mm Stegdoppelplatten mit dem Schichtaufbau A-B, wie sie beispielweise in der EP-A 0 110 238 beschrieben sind, wurden aus folgenden Zusammensetzungen erhalten: Als Basismaterial B wurde Makrolon^{®} 1243 (verzweigtes Bisphenol-A Polycarbonat der Bayer AG, Leverkusen mit einem Schmelzflussindex (MFR) gemäß ISO 1133 von 6,5 g/10 min bei 300°C und 1,2 kg Belastung) verwendet. Coextrudiert wurde dieses mit den in der Tabelle 1 angegebenen Compounds auf Basis Makrolon^{®} 3108 (lineares Bisphenol-A Polycarbonat der Bayer AG, Leverkusen mit einem Schmelzflussindex (MFR) gemäß ISO 1133 von 6,5 g/10 min bei 300°C und 1,2 kg Belastung). Die Dicke der Coex-Schicht beträgt jeweils etwa 50 µm.

Alle Beispiele enthalten neben dem UV-Absorber 0,25 % Penta-erythrit-tetra-stearat (PETS, im Handel erhältlich, Loxiol^{®} VPG 861 der Fa. Cognis, Düsseldorf, Deutschland)

**Tabelle 1**

| **Platte** | **UV-Absorber** |
|---|---|
| | |
| B | 2,5 Formel 1b |
| C | 1,25 Formel 1b |
| D | 10 % Tinuvin 360 |
| E | 7 % Tinuvin 360 |
| F | 5 % Tinuvin 360 |

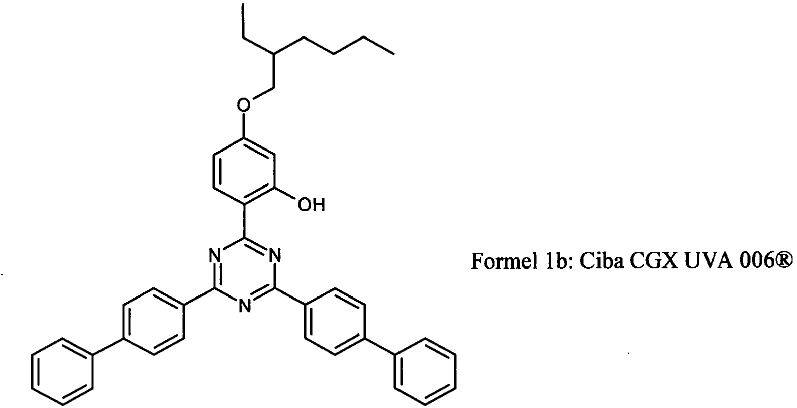

Die verwendeten Maschinen und Apparate zur Herstellung von mehrschichtigen Stegplatten werden im folgenden beschrieben:
Die Einrichtung bestand aus
   - dem Hauptextruder mit einer Schnecke der Länge 33 D und einem Durchmesser von 70 mm mit Entgasung
   - dem Coexadapter (Feedblocksystem)
   - einem Coextruder zum Aufbringen der Deckschicht mit einer Schnecke der Länge 25 D und einem Durchmesser von 30 mm
   - der speziellen Breitschlitzdüse mit 350 mm Breite
   - dem Kalibrator
   - der Rollenbahn
   - der Abzugseinrichtung
   - der Ablängvorrichtung (Säge)
   - dem Ablagetisch.

Das Polycarbonat-Granulat des Basismaterials wurde dem Fülltrichter des Hauptextruders zugeführt, das UV-Coextrusionsmaterial dem des Coextruders. Im jeweiligen Plastifiziersystem Zylinder/Schnecke erfolgte das Aufschmelzen und Fördern des jeweiligen Materials. Beide Materialschmelzen wurden im Coexadapter zusammengeführt und bilden nach Verlassen der Düse und Abkühlen im Kalibrator einen Verbund. Die weiteren Einrichtungen dienten dem Transport, Ablängen und Ablegen der extrudierten Platten.

### Beurteilung des Coextrusionsverhaltens

### Coextrusion mit B:

- geringe Belagsbildung an den Kalibratorplatten nach 5 h
- sehr geringe Querwelligkeit mit unwesentlicher Verschlechterung nach 5 h
- Note: sehr gut

### Coextrusion mit C:

- geringe Belagsbildung an den Kalibratorplatten nach 5 h
- sehr geringe Querwelligkeit mit unwesentlicher Verschlechterung nach 5 h
- Note: sehr gut

### Coextrusion mit D:

- sehr starke Belagsbildung an den Kalibratorplatten nach 5 h, erste Ablagerungen an den Kalibratorplatten bereits nach 45 min.
- nach 2 h in unregelmäßigen Abständen auftretende Querwellen, die die Plattenqualität negativ beeinträchtigen
- Note: schlecht

### Coextrusion mit E:

- Belagsbildung an den Kalibratorplatten nach 5 h
- ansteigende Querwelligkeit über die 5 h Versuchsdauer, die die Plattenqualität leicht negativ beeinträchtigen
- Note: mittel

### Coextrusion mit F:

- Belagsbildung an den Kalibratorplatten nach 5 h
- ansteigende Querwelligkeit über die 5 h Versuchsdauer, die die Plattenqualität leicht negativ beeinträchtigen
- Note: mittel

Die Bewitterung der so hergestellten Platten B bis F erfolgte in einem Atlas Ci 65 A Weatherometer mit einer Bestrahlungsstärke von 0.5 W/m² bei 340 nm und einem Trocken/-Beregnungszyklus von 102:18 Minuten. Die Schwarztafeltemperatur beträgt 65°C, die Probenraumtemperatur 42°C und die Luftfeuchtigkeit 65 ± 5 %.

Die Veränderung des Yellowness Index (Δ YI) in Abhängigkeit von der Bewitterungsdauer ist in der nachfolgenden Tabelle 2 dargestellt:

**Tabelle 2**

| | Zeit in h | 0 | 700 | 1400 | 2100 | 2800 | 3500 | 4200 |
|---|---|---|---|---|---|---|---|---|
| Beispiel | | | | | | | | |
| B | | 0,0 | 0,7 | 1,7 | 1,7 | 1,8 | 2,6 | 2,5 |
| C | | 0,0 | 1,3 | 2,4 | 2,4 | 2,4 | 3,1 | 3,0 |
| D | | 0,0 | 0,8 | 1,4 | 1,5 | 1,4 | 2,1 | 2,3 |
| E | | 0,0 | 0,8 | 1,7 | 1,8 | 1,8 | 3,0 | 2,9 |
| F | | 0,0 | 0,8 | 2,3 | 2,2 | 2,5 | 3,4 | 3,6 |

In den Beispielen B bis F ist eindrucksvoll demonstriert, dass sich die UV-Batches mit dem UV-Absorber der Formel 1 gegenüber dem Standard Tinuvin 360® deutlich besser verarbeiten lassen und Stegplatten hergestellt werden mit verbesserter optischer Qualität. Die Belagsbildung an den Kalibratorplatten ist gegenüber den UV-Batchen mit Tinuvin 360® sichtbar vermindert. Die erfindungsgemäßen Erzeugnisse haben sich darüber hinaus als besonders vorteilhaft im Bewitterungstest erwiesen. Die Witterungsstabilität der coextrudierten Polycarbonatplatten zeigt auch bei kleineren Konzentrationen des UV-Absorbers der Formel 1 eine deutlich besseres Verhalten als beim Standard UV-Absorber Tinuvin 360®.

## Patentansprüche

1. Zusammensetzung enthaltend Polycarbonat und 0,01 bis 2,5 Gew.-Teile, bezogen auf 100 Gew.-Teile des Polycarbonats, einer Verbindung der Formel I 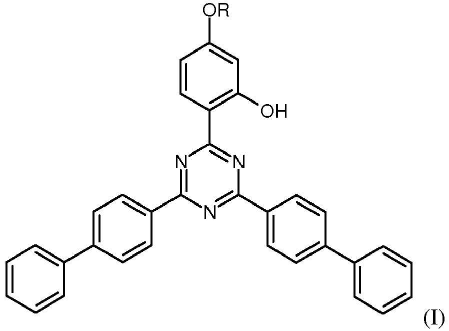 wobei R für 2-Ethylhexyl steht, als einzigen UV-Absorber.

2. Zusammensetzung gemäß Anspruch 1, **dadurch gekennzeichnet, dass** die Zusammensetzung zusätzlich 10 bis 3000 ppm, bezogen auf die Gesamtmasse der Zusammensetzung, Thermostabilisatoren enthält.

3. Zusammensetzung gemäß Anspruch 2, wobei der Thermostabilisator ausgewählt ist aus der Gruppe bestehend aus Tris-(2,4-di-tert.-butylphenyl)phosphit und Triphenylphosphin.

4. Zusammensetzung gemäß einem der Ansprüche 1 bis 3, **dadurch gekennzeichnet, dass** die Zusammensetzung zusätzlich 200 bis 3000 ppm eines Gleitmittels enthält.

5. Zusammensetzung gemäß Anspruch 4, **dadurch gekennzeichnet, dass** das Gleitmittel mindestens eins ist ausgewählt aus der Gruppe bestehend aus Pentaerythrit-tetra-stearat und Molekülen der Formel 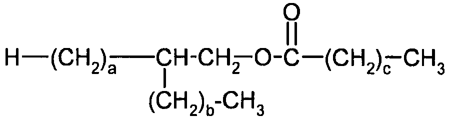 worin a = 0 bis 20, b = 1 bis 25 und c = 10 bis 40 ist.

6. Erzeugnis enthaltend eine Zusammensetzung gemäß einem der Ansprüche 1 bis 5.

7. Erzeugnis gemäß Anspruch 6, **dadurch gekennzeichnet, dass** das Erzeugnis eine einschichtige oder mehrschichtige Platte darstellt, wobei eine oder mehrere der Schichten der Platte eine Zusammensetzung gemäß einem der Ansprüche 1 bis 5 enthalten.

8. Erzeugnis gemäß Anspruch 7, **dadurch gekennzeichnet, dass** das Erzeugnis eine mehrschichtige Platte enthaltend mindestens drei Schichten darstellt, wobei eine oder beide der äußeren Schichten eine Zusammensetzung gemäß einem der Ansprüche 1 bis 5 enthalten.

9. Erzeugnis gemäß Anspruch 6 umfassend eine erste Schicht (A) und eine zweite Schicht (B), wobei die erste Schicht (A) eine UV-Schutzschicht aus Polycarbonat ist, die einen UV-Absorber der Formel (I) enthält, und die zweite Schicht (B) ein Polycarbonat enthält.

10. Erzeugnis nach einem der Ansprüche 7 bis 9 ausgewählt aus der Gruppe bestehend aus Verscheibungen, Gewächshäuser, Wintergärten, Bushaltestellen, Reklametafeln, Schilder, Schutzscheiben, Automobilverscheibungen, Fenster, Überdachungen, Massivplatten, gewellte Platten, Stegplatten und Stegprofile.

## Claims

1. A composition comprising polycarbonate and from 0.01 to 2.5 parts by weight, based on 100 parts by weight of polycarbonate, of a compound of formula I 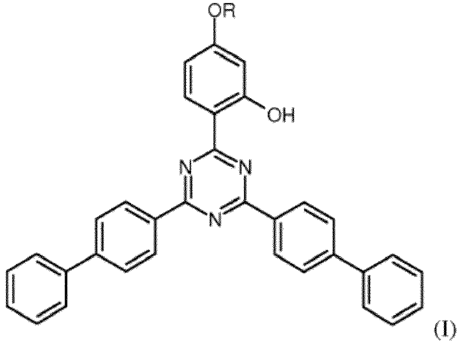 where R is 2-ethylhexyl, as sole UV absorber.

2. The composition according to claim 1 wherein the composition further comprises from 10 to 3000 ppm, based on the total mass of the composition, of heat stabilizers.

3. The composition according to claim 2 wherein the heat stabilizer is selected from the group consisting of tris(2,4-di-tert-butylphenyl) phosphite and triphenylphosphine.

4. The composition according to any one of claims 1 to 3 wherein the composition further comprises from 200 to 3000 ppm of a lubricant.

5. The composition according to claim 4 wherein the lubricant is at least one selected from the group consisting of pentaerythritol tetrastearate and molecules of the formula 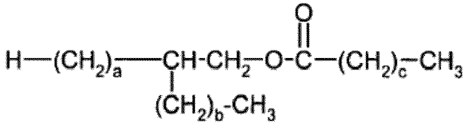 where a is from 0 to 20, b is from 1 to 25 and c is from 10 to 40.

6. Article of manufacture comprising a composition according to any one of claims 1 to 5.

7. Article of manufacture according to claim 6 wherein the article of manufacture constitutes a sheet having one or more layers, wherein one or more of the layers of the sheet comprise a composition according to any one of claims 1 to 5.

8. Article of manufacture according to claim 7 wherein the article of manufacture constitutes a multilayered sheet comprising three or more layers, wherein either or both of the outer layers comprise a composition according to any one of claims 1 to 5.

9. Article of manufacture according to claim 6 comprising a first layer (A) and a second layer (B), wherein the first layer (A) is a UV-protective polycarbonate layer comprising a UV absorber of formula (I) and the second layer (B) comprises a polycarbonate.

10. Article of manufacture according to any one of claims 7 to 9 selected from the group consisting of glazing, greenhouses, conservatories, bus shelters, advertising boardings, signage, protective screens, autoglazing, windows, roofing, solid sheets, corrugated sheets, multi-wall sheets and multi-wall profiles.

## Revendications

1. Composition contenant un polycarbonate et 0,01 à 2,5 parties en poids, par rapport à 100 parties en poids du polycarbonate, d'un composé de formule I 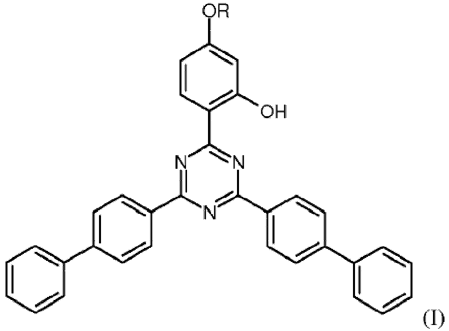 dans laquelle R représente 2-éthylhexyle, en tant qu'absorbeur UV unique.

2. Composition selon la revendication 1, **caractérisée en ce que** la composition contient en outre 10 à 3 000 ppm, par rapport à la masse totale de la composition, de thermostabilisateurs.

3. Composition selon la revendication 2, dans laquelle le thermostabilisateur est choisi dans le groupe constitué par le tris-(2,4-di-tert.-butylphényl)phosphite et la triphénylphosphine.

4. Composition selon l'une quelconque des revendications 1 à 3, **caractérisée en ce que** la composition contient en outre 200 à 3 000 ppm d'un lubrifiant.

5. Composition selon la revendication 4, **caractérisée en ce que** le lubrifiant est au moins un lubrifiant choisi dans le groupe constitué par le tétrastéarate de pentaérythrite et les molécules de formule 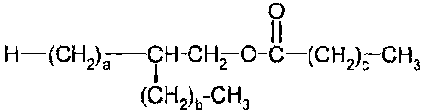 dans laquelle a = 0 à 20, b = 1 à 25 et c = 10 à 40.

6. Article contenant une composition selon l'une quelconque des revendications 1 à 5.

7. Article selon la revendication 6, **caractérisé en ce que** l'article est un panneau monocouche ou multicouche, une ou plusieurs des couches du panneau contenant une composition selon l'une quelconque des revendications 1 à 5.

8. Article selon la revendication 7, **caractérisé en ce que** l'article est un panneau multicouche contenant au moins trois couches, une ou deux des couches extérieures contenant une composition selon l'une quelconque des revendications 1 à 5.

9. Article selon la revendication 6, comprenant un première couche (A) et une deuxième couche (B), la première couche (A) contenant une couche de protection contre les UV en polycarbonate, qui contient un absorbeur UV de formule (I), et la deuxième couche (B) contenant un polycarbonate.

10. Article selon l'une quelconque des revendications 7 à 9, choisi dans le groupe constitué par les vitrages, les serres, les vérandas, les abris de bus, les panneaux publicitaires, les enseignes, les vitres de protection, les vitres automobiles, les fenêtres, les toits, les panneaux massifs, les panneaux ondulés, les panneaux de traverse et les profilés de traverse.
